Europäisches Patentamt

European Patent Office

Office européen des brevets

(11) Publication number: **0 330 317**
**A2**

## (12) EUROPEAN PATENT APPLICATION

(21) Application number: **89300930.8**

(22) Date of filing: **31.01.89**

(51) Int. Cl.⁴: **B60R 11/02**

(30) Priority: **23.02.88 IL 85504**

(43) Date of publication of application:
**30.08.89 Bulletin 89/35**

(84) Designated Contracting States:
**AT BE CH DE ES FR GB GR IT LI LU NL SE**

(71) Applicant: **Cykman, Jose**
**1 Harkaby Street**
**Tel Aviv(IL)**

(72) Inventor: **Cykman, Jose**
**1 Harkaby Street**
**Tel Aviv(IL)**

(74) Representative: **Kosmin, Gerald Emmanuel et al**
**HASELTINE, LAKE & CO. Hazlitt House 28**
**Southampton Buildings Chancery Lane**
**London, WC2A 1AT(GB)**

(54) An anti-theft device for a car radio set.

(57) An anti-theft device for use with a radio or cassette player installed in a motor vehicle comprises a casing having front (10a) and rear (10b) interlocking members. Integrally formed with the front casing member (10a) is a protective housing portion (18) for the body member (20) of a padlock. The shackle (22) of the padlock is protectively housed in an integrally formed extension (30) of the rear casing member (10b). The casing can be anchored to the car floor by a U-shaped leg (52).

EP 0 330 317 A2

## AN ANTI-THEFT DEVICE FOR A CAR RADIO SET

This invention relates to thief-proof devices for radio sets installed in motor vehicles and is concerned with an anti-theft device for a radio or radio cassette player installed in a motor vehicle such as a motor car.

The problem of the ever-increasing theft rate of car radio sets, including radio cassette players, has led to various kinds of solutions. Thus, it has been suggested to armour the radio compartment on the car dashboard by a suitable metal frame secured by a suitable lock. Alternatively, arrangements in which the complete radio set is readily removed from the compartment and carried home upon leaving the car have also gained some popularity.

According to the present invention, there is provided an anti-theft device for use with a radio or cassette player installed in a motor vehicle, the device comprising a casing formed by two separable interlocking front and rear casing members respectively, the casing being dimensioned so as to be capable of accommodating therein a radio or cassette player, the front casing member having in its front wall an opening dimensioned to allow access to the operating panel of the radio or cassette player, locking means for separably locking together the interlocking casing members, and anchoring means for securing the casing and its associated locking means to a fixed part of the interior of the motor vehicle.

In a preferred embodiment of the invention, the device comprises a protective casing which comprises a front, hollow, parallelopiped casing member with a partly open front wall capable of fitting the operating panel of a radio or cassette player, and a complementary, rear casing member, dimensioned to enclose the radio set when fitted against the front section. A first housing portion is integrally formed with one of the casing sections, accommodating the body of a separable padlock, which may be key operated. A second housing portion is integrally formed with the other of the casing sections, accommodating a shackle for the padlock, in register with the padlock body. An anchoring leg is affixed to the bottom of the rear casing member and is adapted to be secured to the floor of the car.

Preferably the first housing portion forms a part of the front casing member, and an opening is formed in a wall common to the front casing member and the first housing portion for the introduction of the padlock body therethrough into the first housing portion. The first and the second housing portions are therefore preferably located at the bottom side of the front and rear casing members, respectively.

The protective casing as a whole is secured to the car floor or other chassis member located beneath the dashboard, between the front seats, by bolts penetrating through the floor, and strengthened by suitable means, rendering burglary of the casing difficult, requiring the use of special tools.

For a better understanding of the invention and to show how the same may be carried into effect, reference will now be made, by way of example, to the accompanying drawings, in which:

Figure 1 is a perspective view of a car radio anti-theft device according to the invention;

Figure 2 is a longitudinal section taken along the line II-II of Figure 1;

Figure 3 is a cross-section taken along the line III-III of Figure 2;

Figure 4 is a front view of the device of Figure 1;

Figure 5 is a top view of the device of Figure 1;

and

Figure 6 is a rear view of the device of Figure 1.

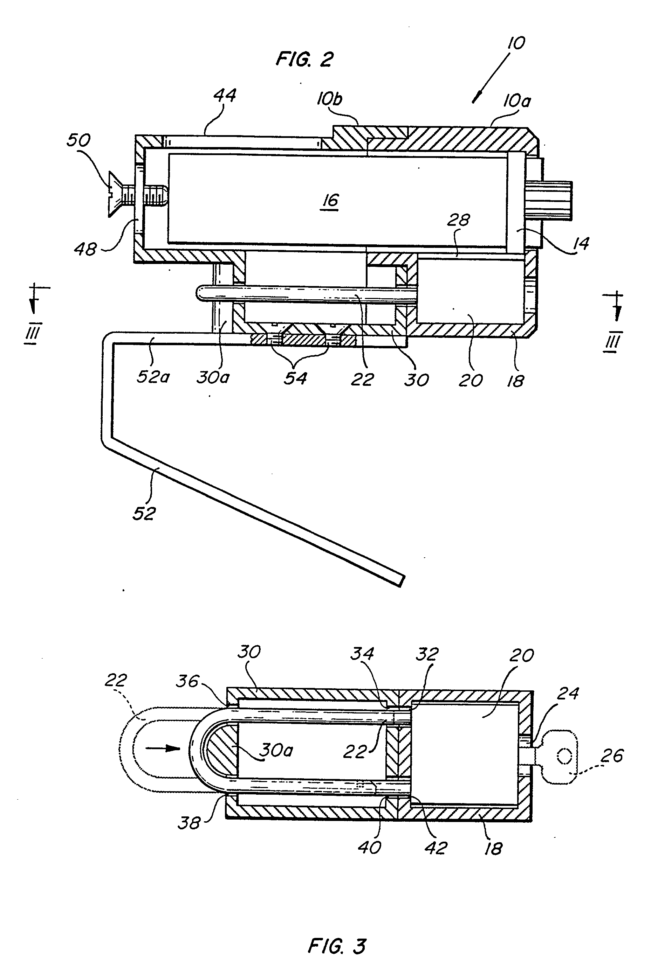

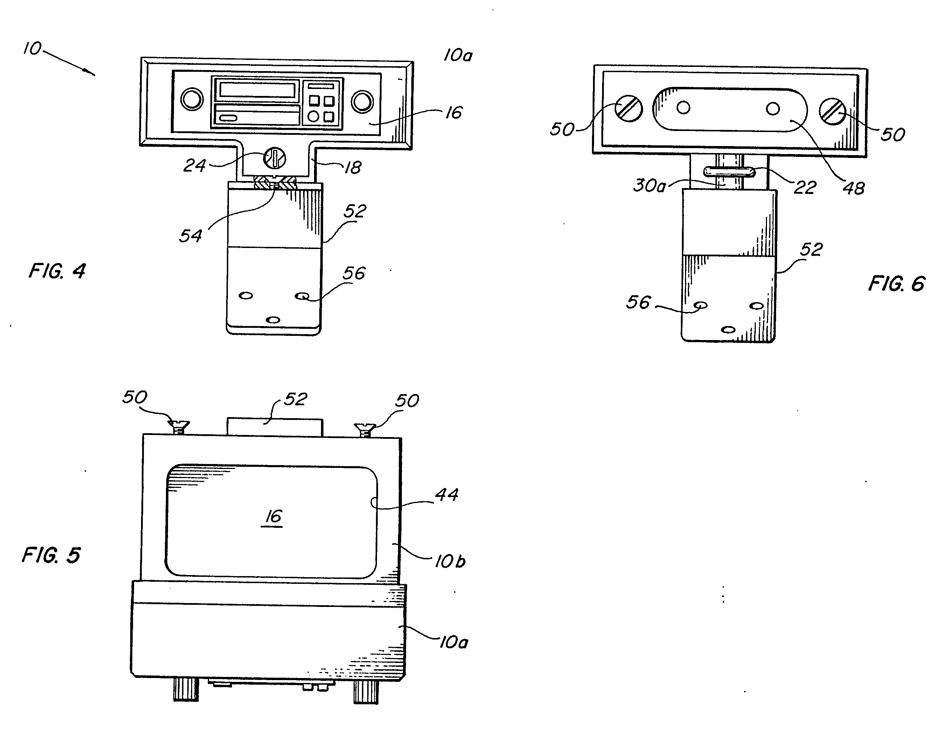

Referring to the drawings, an anti-theft device (10) for a car radio set (16) has a casing comprising a front casing member (10a) and a rear casing member (10b) which are capable of interlocking with each other, as shown in Figure 2 of the drawings. The casing members are preferably made of cast aluminium. The front casing member (10a) is formed at its front wall end with an opening (12) capable of fitting around the operating panel (14) of the radio set (16), as more clearly shown in Figure 4.

Integrally formed with the bottom of the front casing member (10a) is a protective housing portion (18) which is dimensioned so as to be capable of receiving therein the body member (20) of a padlock having an associated separable shackle (22). A suitable opening (24) is present in the housing portion (18) for insertion of a padlock key (26), as shown in Figure 3. The padlock body member (20) is adapted to be inserted into the housing portion (18) from above through a rectangular opening (28) formed between the interiors of the front casing member (10a) and the housing portion (18).

Integrally formed with the bottom of the rear casing member (10b) is a second housing portion (30) dimensioned so as to be capable of accommodating the shackle (22). Suitable series of aligned bores (32), (34) and (36) at the one side, and (38), (40) and (42) at the opposite side, are formed in the housing portions (18) and (30) for the insertion of the padlock shackle (22), as clearly shown in Figure 3. The rear wall of the housing portion (30) is preferably provided with a bulging portion (30a) which fits the interior curvature of the closed end of the shackle (22).

An opening (44) is provided in the top wall of the rear casing member (10b) to reduce its weight and save material and to allow access to leg mounting bolts (54), as will be explained below. The rear wall of the rear casing member (10b) is provided with an opening (48) (see Figure 6), and, in addition, with a pair of adjustment screws (50) for tightening the radio set (16) against the front wall of the front casing member (10a).

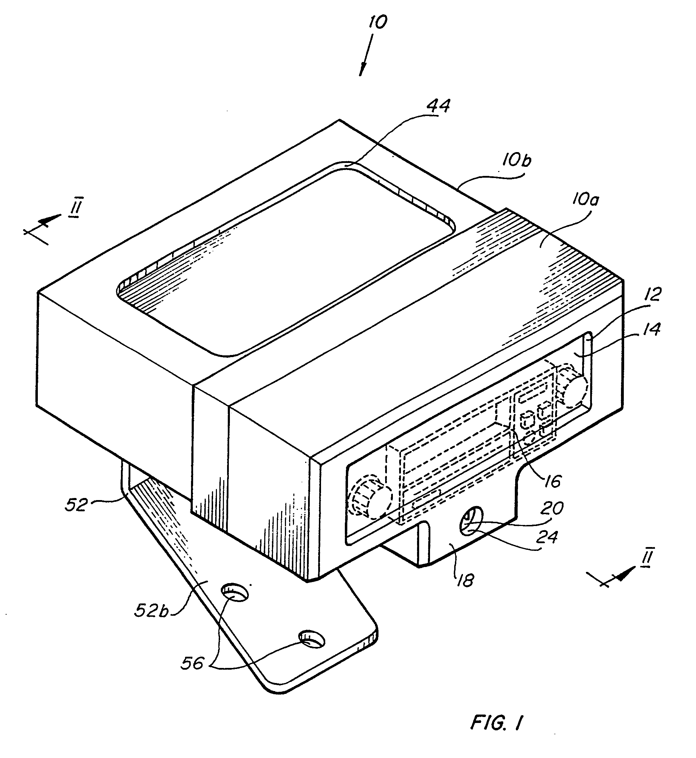

Anchorage for the device (10) is provided by a mounting leg or pedestal (52) of a generally U-shaped configuration (depending on the model of the car), having one arm (52a) thereof fastened by the bolts or screws (54) to the bottom of the housing portion (30), and the other arm (52b) (see Figure 1) thereof sloping down and provided with holes (56) for anchoring the device to the floor of a car (not shown).

In use, the anti-theft device after being firmly affixed to the car, is first separated into its front and rear casing members (10a) and (10b) for insertion of the radio set (16). The padlock shackle (22) is separated from the body member (20) of the padlock, as shown in broken lines in Figure 3. When the radio set is properly installed, with its front panel exposed through the opening (12), the two casing members are assembled and locked one against the other by the padlock assembly (20-22). The screws (50) are tightened so as to avoid movement of the radio within the interlocked casing members.

During use of the invention, the radio set remains quite conveniently located and easily accessible by the driver, or by the passenger sitting next to the driver, and remains safely nested within the interlocked casing members.

It will be appreciated that variations may be applied to the embodiment of the invention heretofore described with reference to the drawings. For example, the housing portions (18) and (30) could be located at one of the sides of the casing, or even at its top side, with the mounting leg (52) being suitably shaped to reach next to a stiff body or chassis portion of the car. Alternative locking means equivalent to the padlock and shackle arrangement may be used.

## Claims

1. An anti-theft device (10) for use with a radio or cassette player (16) installed in a motor vehicle, the device comprising a casing formed by two separable interlocking front and rear casing members (10a and 10b) respectively, the casing being dimensioned so as to be capable of accommodating therein a radio or cassette player (16), the front casing member (10a) having in its front wall an opening (12) dimensioned to allow access to the operating panel (14) of the radio or cassette player (16), locking means (20 and 22) for separably locking together the interlocking casing members, and anchoring means (52) for securing the casing and its associated locking means to a fixed part of the interior of the motor vehicle.

2. An anti-theft device as claimed in Claim 1, wherein the casing has a first housing portion (18) integrally formed with the front casing member (10a) and a corresponding second housing portion (30) integrally formed with the rear casing member (10b), in which housing portions can be accommodated respectively a padlock body member (20) and a shackle (22) in register with the body member (20) whereby the front and rear casing members can be separably locked together.

3. An anti-theft device as claimed in Claim 2, wherein the first housing portion (18) communicates with the front casing member (10a) by means of an opening (28) through which a padlock body member (20) can be introduced into the first housing portion (18).

4. An anti-theft device as claimed in Claim 3, wherein the first and second housing portions (18 and 30) are formed on the bottom of the casing members (10a and 10b) respectively.

5. An anti-theft device as claimed in Claim 4, wherein the anchoring means (52) is a generally U-shaped leg one arm of which is adapted to be fastened to the bottom of the second housing portion (30) and the other arm of which is adapted to be fastened to the floor of the motor vehicle.

FIG. I

FIG. 2

FIG. 3

FIG. 6

FIG. 4

FIG. 5